COMPLETE DOCUMENT

(19) Europäisches Patentamt
European Patent Office
Office européen des brevets

(11) Publication number: 0 055 894 A2

(12) EUROPEAN PATENT APPLICATION

(21) Application number: 81305549.8

(22) Date of filing: 24.11.81

(51) Int. Cl.³: C 08 L 67/02
C 08 K 5/17

(30) Priority: 24.11.80 GB 8037618

(43) Date of publication of application: 14.07.82 Bulletin 82/28

(84) Designated Contracting States: AT BE CH DE FR GB IT LI LU NL SE

(71) Applicant: Dalton, John Arthur
810 Tung Ying Building 100 Nathan Road
Kowloon(HK)

(72) Inventor: Dalton, John Arthur
810 Tung Ying Building 100 Nathan Road
Kowloon(HK)

(74) Representative: Allam, Peter Clerk et al,
LLOYD WISE, TREGEAR & CO. Norman House 105-109 Strand
London WC2R 0AE(GB)

(54) **Conductive plastic compositions.**

(57) In cases where spark discharges could be dangerous, e.g. explosive factories, chemical plants and operating theatres, it is important to provide footwear soles, floor tiles and the like which are of a controlled electrical conductivity, i.e. not to such a high conductivity that danger of electrocution could occur if a wearer touches the electric mans accidentally and not to such a low conductivity that significant charge build-up can occur.

The present composition is a synthetic plastics material composition comprising a high molecular weight thermoplastics material comprising a segmented copolyether/ester polymer, preferably one containing intra-polymerised butylene terephthalate hard segments and polytetramethylene ether terephthalate soft segments and, as a conductivity promoting component, a quaternary ammonium compound preferably with a long chain fatty acid residue and an amine group, such that when moulded or shaped to give a resilient shaped article, the composition has an electrical resistance preferably no greater than $1 \times 10^8$ ohms and no less than $5 \times 10^4$ ohms when measured according to British Standard BS2050.

EP 0 055 894 A2

This invention relates to resilient solid compositions. In particular, the invention relates to synthetic thermoplastics material compositions which have a controlled level of electrical conductivity. Such compositions are useful, inter alia, in the production of the soles for footwear and as solid floor covering materials.

In many industrial situations, it is important that there be no build-up of electrical charges such that these charges discharge by means of a spark. For example, sparks need to be avoided in explosives factories and many chemical and refining plants. Another situation where spark discharges have to be avoided is in hospitals, particularly in operating theatres, where ignition of potentially explosive anaesthetic gases would be very dangerous.

The risk of people becoming charged with static electricity occurs when the footwear worn has a synthetic rubber or plastics material sole which is electrically insulating and/or when the flooring surface is electrically insulating. Under these circumstances, and particularly when the atmosphere is dry, a person can readily become charged up to a very high voltage whose energy is liable to be released in the form of a spark when the person approaches a conductive surface.

To avoid this, some form of conductive path of controlled resistance is required between the person and earth. However, it is disadvantageous for that path to have

too low a resistance since then if the person touches a high voltage electric source, e.g. mains electricity, his resistance to ground may be so low that he may suffer a serious or fatal electric shock.

Therefore various arrangements have been adopted including form of metal brace containing in series a high resistance, the brace being strapped around the calf of the leg and extending down to the sole of the shoe to contact the floor. Such an arrangement is obviously cumbersome and so not convenient to wear. It has also been suggested that the soles of shoes or a plug in the sole be made of a composition containing graphite or carbon black so as to render the sole conductive. The problems with this, however, include the facts that the conductivity of graphite-based compositions are difficult to control and that the graphite is liable to leave unsightly black marks on flooring.

According to the invention there is provided a conductive synthetic plastics material composition comprising a high molecular weight thermoplastics material comprising a segmented copolymer/ester polymer, preferably one containing intra-polymerised butylene terephthalate hard segments, and polytetramethylene ether terephthalate soft segments and, as a conductivity promoting component, a quaternary ammonium compound such that when moulded or shaped to give a resilient shaped article, the composition has an electrical resistance which is preferably no greater than $1 \times 10^8$ ohms and which is

no less than $5 \times 10^4$ ohms when measured according to British Standard BS 2050.

The invention also extends to a method of making a synthetic plastics material composition electrically conductive, which comprises incorporating a quaternary ammonium compound within the composition before moulding or shaping so as to disperse the quaternary ammonium compound throughout the composition followed by moulding or shaping the composition to give an electrically conductive article.

The invention also extends to anti-static articles, e.g. soles for shoes, tiles for the floor, conveyor belts, gear wheels and other items such as those mentioned in British Standard BS 2050, made by moulding or otherwise shaping the article from such compositions.

Therefore, according to another aspect of the invention, there is provided an anti-static article of footwear at least the sole of which comprises a conductive synthetic plastics material composition as described above.

The article of footwear can be of any type such as a shoe, a plimsoll, a wellington, a half-wellington, an ankle boot or an overshoe.

In order to ensure that the sole of the footwear according to the invention is in electrical contact with ground, the floor on which he is standing must be conductive and in addition, his foot must be in good contact with the sole. For example, covering the sole may be a liner or

inner-sole of cellulose fibre material, e.g. that known as Texon or Bontex which, although highly resistive in itself, readily absorbs moisture from the foot of the user and so rapidly becomes electrically conductive when in use and so provides a good electrical connection between the foot and the sole.

The segmented copolyether/ester can consist essentially of a multiplicity of recurring long chain ether/ester units and short chain ester units joined head to tail through ester linkages and having the following general formula:

$$[(O-D-O-\overset{\overset{O}{\|}}{C}-R-\overset{\overset{O}{\|}}{C})_a(O-G-O-\overset{\overset{O}{\|}}{C}-R-\overset{\overset{O}{\|}}{C}-O-)_b]_n$$

in which G is a divalent radical remaining after the removal of terminal hydroxyl groups from a poly ($C_{2-10}$ alkylene oxide)glycol having a molecular weight of about 350 to 6,000; R is a divalent radical remaining after removal of carboxyl groups from an aromatic dicarboxylic acid having a molecular weight less than about 300; and D is a divalent radical remaining after removal of hydroxyl groups from an alkyldiol having a molecular weight less than about 250; a and b are integers such that the short chain units represented by a comprise from 50 to 90 percent by weight of the composition; and n is the degree of polymerization.

In the above formula, G may be derived from poly (tetra-methyleneoxide)glycol, e.g. of molecular weight of about 1,000, D from 1,4-butanediol, and R from a phthalic acid and is, for example, terephthaloyl, isophthaloyl, orthophthaloyl or mixtures thereof.

The thermoplastics material for use in accordance with the present invention may be prepared from the segmented copolyether/ester compositions disclosed in U.S. Patent No. 3,023,192, incorporated herein by reference, which states in part at Column 2, line 20 et seq.:

"The copolyetheresters of this invention are prepared by reacing one or more dicarboxylic acids or their ester-forming derivatives, one or more difunctional polyethers with the formula:

$$CHO(RO)_pH$$

(in which R is one or more divalent organic radicals and p is an integer of a value to provide a glycol with a molecular weight of between about 350 and about 6,000), and one or more dihydroxy-compounds selected from the class consisting of bis-phenols and lower aliphatic glycols with the formula:

$$HO(CH_2)_qOH$$

(in which q is 2-10), with the proviso that the reactants be selected so that substantially all of the repeating units of the polyester contain at least one aromatic ring. The resulting ester is then

polymerized."

The preparation of other related segmented thermoplastic copolymers are described in the following additional references which are also incorporated herein by reference for their teachings in this regard: U.S. Patents Nos. 3,651,014; 3,763,109; 3,766,146; and 3,784,520.

The preferred thermoplastics material contains (a) intra-polymerised butylene terephthalate hard segments of molecular weight 220 and (b) polytetramethylene ether terephthalate soft segments of molecular weight 1132. They can be prepared by polymerising 1,4-butanediol terephthalic acid and polytetramethylene ether glycol. The relative proportions of (a) to (b) determines the hardness or stiffness of the final product since the hard crystalline blocks give strength whilst the soft amorphous segments give flexibility without the need for a plasticizer.

The basic formula of the thermoplastics material is:

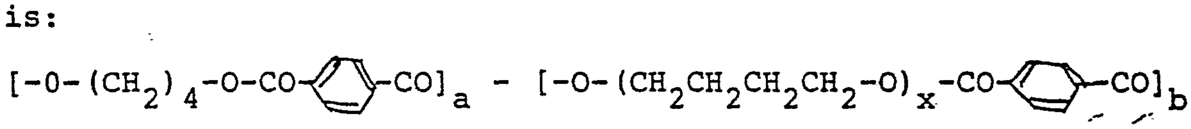

in which a is an integer such that the segments represented by (a) comprise from 50 to 90% by weight of the total copolymer, b is an integer such that the segments represented by (b) comprises 50 to 10% of the total copolymer, and x is an integer reflecting the molecular weight of the ether glycol,

e.g. x is 14 for a molecular weight of (b) of about 1,000.

These thermoplastics polymers are highly resilient, have an outstanding resistance to flex cut growth at both low and high temperatures, have good compressive and tensile stress characteristics compared with polymers of similar hardness, have good abrasion resistance, have little hysteresis loss in dynamic applications, have good creep resistance, are resistant to beta radiation and are resistance to hydrolysis in hot water and to mildew and fungus attack.

They can also be extruded, injection moulded, blow or roto moulded and melt cast so that they can readily be shaped for any particular use.

An example of the thermoplastics material is the thermoplastic polyester elastomer sold under the trade name Hytrel by E.I. du Pont de Nemours & Co. Commercial grades of Hytrel cover hardness range of 92 Durometer on A scale equal to 40 on D scale, to 72 Durometer on D scale. Hytrels are available in a range including 5556, 4056, 5526, 5555 HS, 6346A, ND 7246, 6346 and 7246, the nomenclature being explained as follows:

the first two digits are the polymer hardness on the D scale, the third digit designates viscosity (2 is a moulding grade, 4 and 5 are general purpose grades), and the last digit indicates the type of

antioxidant (5 is discolouring and 6 is non-discolouring).

It appears that the harder the grade of Hytrel, the more suitable it is for use according to the invention.

Particulate fillers may be included and the filler is desirably one which will enhance the conducting action of or be synergistic with the quaternary ammonium compound. An example of a filler is a finely divided aluminium silicate, e.g. Silteg AS7 as available from Degussa. Addition of excess fillers should generally be avoided, however, to avoid degradation of the mechanical preperties of the moulded product.

The composition of the invention is particularly useful in the manufacture of soles for anti-static footwear, and anti-static flooring since the composition is neither an insulator nor a good conductor. Instead, it has a controlled level of low conductivity sufficient to allow leakage away of static electricity charges but insufficient to allow a person to receive serious electric shocks if he should touch a source of live electricity. The composition is also useful in the production of such high pressure moulded articles as solid rubber rollers or trolley wheels where there is a requirement for the use of an anti-static composition to eliminate static charges.

The component used in the composition of the invention to give this controlled resistivity conductivity

should be a compound which is not abrasive so that when moulding the compositions they do not cause rapid wear of moulds and dyes. Carbon black and graphite are not suitable therefore and in addition the carbon compounds have a propensity to leave unsightly marks on flooring when used in soles. Further, particulate conductive fillers tend to stratify into layers when compositions are vulcanised or moulded so giving very erratic conductivities. By avoiding such compounds, therefore, and using a quaternary ammonium compound which can be dispersed substantially uniformly throughout the mass of the composition, these problems can be overcome or at least reduced and in addition there is the advantage that compositions according to the invention need not be dark coloured so one can add colouring compositions or dyes to the compositions of the invention to give them whatever colour is required.

Suitable quaternary ammonium compounds appear to be those which contain a long chain fatty acid residue such as a stearyl group and also an amine group and an example of a quaternary ammonium compound which has been found to be effective is stearamidopropyldimethyl-3-hydroxyethyl-ammonium nitrate, i.e.

$$\left[ C_{17}H_{35}CONHCH_2CH_2CH_2\overset{\displaystyle CH_3}{\underset{\displaystyle CH_3}{N}}CH_2CH_2OH \right]^{+} NO_3^{-}$$

This compound is available under the Trade Mark Cyastat SN from Cyanamid Company as a solution in aqueous isopropanol and as such is suitable for incorporation into the thermoplastics material.

Another quaternary ammonium compound which can be used is N,N-bis(2-hydroxyethyl)-N-(3'-dodecyloxy-2'-hydroxypropyl)methylammonium methosulphate which is available from American Cyanamid Company under the trade name "Catanac 609" in the form of a 50% solution in isopropyl alcohol/water mixture.

The amount of the quaternary ammonium compound to be added in a particular case can readily be found by simple experiment. Thus, the addition of a few percent such as 0.5 or 1 to 10%, preferably 1 to 7%, and more preferably 1 to 3%, and most preferably 1 to 2%, by weight of the compound to the composition will usually be found to give a resistance in or near the range required. In practice, it is preferred that the resistance of the material be towards the upper limit of resistance rather than towards the lowe limit. In addition, it is important that the compound give the moulded or shaped composition a conductivity through its mass within the required range and not merely a surface conductivity over the surface of the mass. Therefore, the quaternary ammonium compound needs to be well mixed and dispersed throughout the mass of the composition and not merely sprayed on or caused to migrate to the surface of the composition.

The addition of the quaternary ammonium compound to the thermoplastics material significantly lowers the inherent resistance of the thermoplastics material and the precise mixture used can be chosen with particular quaternary ammonium compounds and particular thermoplastics to give a conductivity for a product as specified in BS 2050. This is in contrast to the very high inherent resistance of the thermoplastics material sold as Hytrel, see for example Table 2 in the article "New Developments in Copolyester ether elastomers" by Robert P. Kane in Journal of Elastomers and Plastics, Vol. 9 (October 1977) starting at page 416. Further, the test performed according to BS 2050 demonstrates a conductivity through the mass of the material and not a mere surface effect.

The invention will now be illustrated by the following examples.

Example 1

A control sample (HC) of Hytrel 5556 powder as obtained from Du Pont was moulded in a sheet mould at 1000 psi (7.0307 x $10^5$ kg/$m^2$) for 10 mins at 180°C. A sheet of 3mm thickness was obtained.

Other samples (H1 to H3) were moulded after mixing amounts of Cyastat SN as set out in the following Table I by mixing the Cyastat SN with the Hytrel 5556 in a mill followed by pressing in the sheet mould under the same conditions as for sample HC.

Each sheet was tested for its electrical conductivity and the results are listed in Table I.

Table I

| Sample | Cyastat SN % | phr | Milling Temp | Time | Comments |
|---|---|---|---|---|---|
| Control HC1 | 0 | 0 | - | - | White translucent semi-rigid sheet, poor flow at the edges, no conductivity |
| H11 | 1 | 2 | 100 | 20 | Brown with black specks indicating degradation, satisfactory conductivity |
| H21 | 2 | 4 | 100 | 20 | As above, with some air-trapping at sheet surface, satisfactory conductivity |
| H31 | 3 | 6 | 100 | 20 | As above but conductivity too high |

Example II

Example I was repeated except that the thickness of the moulded sheet was incresed to 6mm so that the effect of sample thickness on volume resistivity could be checked. The resulting sheets were tested for their electrical resistance according to BS 2050 at 500 V using the liquid electrodes of the form of Clause A4.2.

The results are set out in Table II.

Table II

| Sample | Cyastat SN % | Cyastat SN phr | Milling Temp | Milling Time (min) | Appearance | Electrical resistance (ohm) |
|---|---|---|---|---|---|---|
| Control HC2 | - | - | - | - | White/translucent | - |
| H12 | 1 | 2 | 50 | 10 | Pale brown, surface blisters | $4 \times 10^7$ |
| H22 | 2 | 4 | 50 | 10 | Pale brown, surface blisters | $4 \times 10^6$ |
| H32 | 3 | 6 | 50 | 10 | Pale brown, surface blisters | $9 \times 10^5$ |

Example III

Example I was again repeated except that a red pigment was incorporated, and that the Cyastat SN was mixed with the Hytrel 5556 on a warm mill to ease difficulty of mixing and thereafter the pigment was added to the resulting lumps and mixed in a Kenwood mixer.

The results are set out in Table III.

Table III

| Sample | Cyastat SN | | Pigment | | Mixing | | Appearance |
|---|---|---|---|---|---|---|---|
| | % | phr | % | phr | Temp (°C) | Time (min) | |
| HC3 | - | - | 2 | 2 | - | - | Red pigment uniform dispersion; material brittle |
| H13 | 1 | 2 | 2 | 2 | 50 | 10 | Slightly darker colour, brittle |
| H23 | 2 | 4 | 2 | 2 | 50 | 10 | Slightly darker colour, brittle |
| H33 | 3 | 6 | 2 | 2 | 50 | 10 | Slightly darker colour, brittle |

Example IV

Example I was again repeated and both a pigment and an aluminium silicate filler (Degussa Silteg AS7) were added under the same conditions as in Example III.

The results are set out in the following Table IV.

Table IV

| Sample | Cyastat SN | | Pigment | | Silteg AS7 | | Mixing | | Appearance |
|---|---|---|---|---|---|---|---|---|---|
| | % | phr | % | phr | % | phr | Temp (°C) | Time (min) | |
| HC4 | 2 | 4 | | 2 | - | - | 50 | 10 | Brittle, stiff but some resilience |
| H14 | 2 | 4 | | 2 | | 20 | 50 | 20 | Increased hardness |
| H24 | 2 | 4 | | 2 | | 40 | 50 | 10 | Difficult to mould |
| H34 | 2 | 4 | | 2 | | 60 | 50 | 10 | Very hard, poor flow |
| H44 | 2 | 4 | | 2 | | 80 | 50 | 10 | Very hard and brittle, difficult to mould |

Example V

Samples of antistatic floor tiles were first moulded in Hytrel 5556 (powder) and Hytrel 4056 (granule). Mixes were prepared with 1.5% Cyastat D609 and a suitable pigment. Tiles were moulded 3mm thick.

Formulation :

| Ingredient | phr |
|---|---|
| Hytrel | 100 |
| Cyastat D609 | 3 |
| Pigment (where applicable) (Cromophtal orange) | 2 |

Mixing :

Premixes were prepared using tumbler mixing.

Ingredients were blended on the mill and sheeted out as thick as possible.

H40 required a higher temperature because of granular form.

Blanks of correct weight were loaded into the 3mm sheet mould and pressed at 60 bar for 10 min.

After formulation the samples were tested as in Example II.

| Polymer | Sample No. | Cyastat D609 | | Pigment | Mill Mixing | | Pressing | | | Electrical resistance (ohm) |
|---|---|---|---|---|---|---|---|---|---|---|
| | | % | phr | phr | Temp (°C) | Time (min) | Temp (°C) | Time (min) | Pressure (bar) | |
| Powdered | H55 | 1.5 | 3 | – | 50 | 10 | 180 | 10 | 60–70 | $3 \times 10^8$ |
| Hytrel 5556 | H55P | 1.5 | 3 | 2 | | | | | | $1.0 \times 10^{10}$ |
| " | H55C | – | – | – | | | | | | – – |
| Hytrel 4056 | H4Q | 1.5 | 3 | – | 140 | 8 | 140 | 10 | 60–70 | $4 \times 10^9$ |
| " | H40P | 1.5 | 3 | 2 | | | | | | $4 \times 10^9$ |
| " | H40C | – | – | – | | | | | | – – |

WHAT I CLAIM IS:

1. A conductive synthetic plastics material composition comprising a high molecular weight thermoplastics material comprising a segmented copolyether/ester polymer and, as a conductivity promoting component, a quaternary ammonium compound such that when moulded or shaped to give a resilient shaped article, the composition having an electric resistance which is preferably no greater than $1 \times 10^8$ ohms and which is no less than $5 \times 10^4$ ohms when measured according to British Standard BS 2050.

2. A composition as claimed in Claim 1 in which the quaternary ammonium compound has a long chain fatty acid residue.

3. A composition as claimed in Claim 2 in which the quaternary ammonium compound additionally contains an amine group.

4. A composition as claimed in Claim 3 in which the quaternary ammonium compound is stearamidopropyldimethyl-3-hydroxyethylammoniumnitrate.

5. A composition as claimed in any preceding claim which contains from 0.5 to 10% by weight of the quaternary ammonium compound.

6. A composition as claimed in Claim 5 which contains from 1 to 3% by weight of the quaternary ammonium compound.

7. A composition as claimed in any preceding claim in which the thermoplastics material is one containing intra-polymerised butylene terephthalate hard segments and polytetramethylene ether terephthalate soft segments.

8. A composition as claimed in Claim 7 in which the segmented copolyether/ester consists essentially of a multiplicity of recurring long chain ether/ester units and short chain ester units joined head to tail through ester linkages and having the following general formula:

$$[(O-D-O-\overset{O}{\overset{\|}{C}}-R-\overset{O}{\overset{\|}{C}})_a(O-G-O-\overset{O}{\overset{\|}{C}}-R-\overset{O}{\overset{\|}{C}}-O)_b]_n$$

in which G is a divalent radical remaining after the removal of terminal hydroxyl groups from a poly($C_{2-10}$ alkylene oxide)glycol having a molecular weight of about 350 to 6,000; R is a divalent radical remaining after removal of carboxyl groups from an aromatic dicarboxylic acid having a molecular weight less than about 300; and D is a divalent radical remaining after removal of hydroxyl groups from an alkyldiol having a molecular weight less than about 250; a and b are integers such that the short chain units represented by a comprise from 50 to 90 percent by weight of the composition; and n is the degree of polymerization.

9. A composition as claimed in Claim 7 in which the thermoplastics material has been prepared by polymerising

1,4-butanediol terephthalic acid and polytetramethylene ether glycol.

10. A sole for a piece of footwear which has been made from a composition as claimed in any preceding claim.

11. A floor tile which has been made from a composition as claimed in any of claims 1 to 9.

LLOYD WISE, TREGEAR & CO.
NORMAN HOUSE 105-109 STRAND
LONDON, WC2R 0AE